# EUROPEAN PATENT SPECIFICATION

(11) **EP 1 889 462 B1**
(45) Date of publication and mention of the grant of the patent: **25.02.2015**
(21) Application number: 06772077.1
(22) Date of filing: 05.06.2006
(51) Int. Cl.: H04M 3/533

(54) **SYSTEMS AND METHODS FOR PROVIDING LOCATION ENABLED VOICE MAIL**
SYSTEME UND VERFAHREN ZUR BEREITSTELLUNG EINER POSITIONSAKTIVIERTEN VOICEMAIL-FUNKTION
SYSTEMES ET PROCEDES DE FOURNITURE DE MESSAGE VOCAL ACTIVE EN FONCTION D'UN EMPLACEMENT

(30) Priority: 10.06.2005 US 150458
(43) Date of publication of application: 20.02.2008
(73) Proprietor: ALCATEL LUCENT, 92100 Boulogne-Billancourt (FR)
(72) Inventor: ESH, Thomas, D., Granville, OH 43023 (US); NAGESH, Harsha, S., Highland Park, NJ 08904 (US); POOSALA, Viswanath, Basking Ridge, NJ 07920 (US); SRIVASTAVA, Anurag, New Providence, NJ 07974 (US)
(74) Representative: Therias, Philippe
(86) International application number: PCT/US2006/021631
(87) International publication number: WO 2006/135591

(56) References cited:
- WO-A-01/15464
- US-A1- 2002 049 768
- US-A1- 2003 016 804
- US-A1- 2004 257 274

## Description

### Field of the Invention

The present invention relates generally to improvements in the field of mobile communication, and, in particular, to systems and methods for providing location enabled voice mail.

### Background of the Invention

Voice mail is an important business service in the world of telecommunication. Voice mail is provided to both wireline and wireless devices. Consumers have voice mail at work, at home, and on their mobile devices. Lucent Technologies Inc. of 600 Mountain Avenue, Murray Hill, NJ 07974, a provider of communications products and services, has developed a messaging server, Anypath® Messaging System (AMS) for wireline and wireless devices. The AMS allows service providers the ability to offer a complete range of unified communication features to subscribers. AMS allows for a common user experience across public switched telephone network (PSTN), 2G/2.5G/3G, internet protocol (IP) and converged networks. By deploying a messaging server such as the AMS, subscribers can access, retrieve, and manage content and information from any wireline or mobile phone, personal computer(PC), personal digital assistant (PDA), and the like.

Location servers and accompanying software code such as Lucent Technologies' iLocator product provide a location based service platform which supports custom location and presence based services such as alerting and tracking family, friends and enterprises while incorporating privacy controls.

Examples of phone systems employing location identification include Sheha et al., Position Determination System, US2003/0016804A1, in which a caller and receiver of a telephone call provide to and receive from each other position information related to the caller and/or receivers physical location in the context of location and navigational systems. Bugnon, Preferred Caller Profile for Voice Mail System, WO 01/15454, addresses permitting a caller to access a user's voice mail system to obtain location information of the user. If the call line identity of the caller matches one of a set of user defined call identities, a message recorded or selected by the user is played for the caller. Benco, et al., Network Support for Access to Location Information of a Mobile Device, US 2004/0257274, addresses determining the geographic coordinates of user equipment of a paged party by communicating with a GPS receiver associated with the user equipment of the paged party or by cellular triangulation. As one example, parents may verify the location of their children carrying such equipment. As another example, security agencies or delivery services may verify and/or log the location of their personnel carrying such equipment. Additionally, Peek, et al., Method and Apparatus for Identifying and Replying to a Caller, US 2002/0049768, addresses a voice mail system in which a recipient of a call is provided with the ability to reply to an internal or external voice message in a common manner. A method for providing a reply includes identifying a caller, and returning an address of the caller from a database which the callers address with his or her identity.

Voice mail is typically retrieved after some time has passed since the calling party left a voice mail message. In today's mobile culture, people are constantly on the go to meet work deadlines, to satisfy family obligations, and to squeeze in recreation or entertainment events. As the time interval increases between the time when a calling party left a message and the time when the called party or subscriber retrieves the message, the relevancy of the voice mail message may decrease and in some cases may be misleading.

### Summary of the Invention

Among its several aspects, the present invention recognizes that the capabilities of the aforementioned products can be advantageously combined and adapted as taught herein to provide a wide array of location enabled voice mail services as described further herein. While it is hard to envision all the creative uses that service providers may want to offer or mobile users may want from a location enabled voice system or service in accordance with the present invention, several illustrative examples are discussed below. With the present invention, a user could receive a location enabled voice mail service, such as a map containing both the previous and current location information of the calling party. The previous location being the location at the time the voice mail was left and the current location being the location at the time the voice mail was retrieved. Besides a map, the location enabled voice mail service may include a speech message, text message, or the like indicating the location of the calling party. Additionally, location enabled voice mail service indicating the previous and current locations of the calling party, or both could be conveyed to the party leaving the message. The map and messages may also contain previous and current location information of the called party. By providing such location information upon retrieval of a voice mail message, a subscriber may determine whether the retrieved voice mail message is still relevant, may deduce more relevant information not present in the voice mail message, or the like. A subscriber may also validate the expected location of the called party by receiving such location information when retrieving the corresponding voice mail message.

For example, if two people are planning to meet at a ball game, the calling party may leave a voice mail message with the called party requesting confirmation on where to meet. As an alternative or in addition, the called party may set a preference in his or her voice mail account to report the location of the calling party at the time the voice mail message was left and the location of the calling party when the voice mail is received. This preference may be dependent on a calling party number, called party number, time of day, or a combination thereof. When the called party retrieves the voice mail message, the present invention may deliver a map indicating the previous and current location of the calling party. From this map, the called party can determine, for example, 1) if the calling party is waiting for a return message before heading to the ball park, 2) if the calling party is running tangential errands on his or her way to the ball park, and 3) how far the calling party has traveled since leaving the message. Furthermore, the called party may select a preference for the map to plot his or her current location to determine how far apart the two parties are currently.

By way of another example, the teachings of the present invention allow employers to track remote employees who have responsibilities that involve being located at a client's site such as a delivery truck driver. When the delivery truck driver makes a delivery to a client, the driver would call a subscriber number and leave a voice mail message to confirm. The present invention can be utilized to provide a map or a voice or text message indicating the location of the truck driver when the call was made. The employer or supervisor may then retrieve the message and be delivered a map indicating where the truck driver was located at the time the message had been left allowing the employer or supervisor to verify that the truck driver actually made a delivery at an expected delivery time. Continuing with this example, the present invention may consolidate previous locations with each message left by a calling party. In this way, when the employer retrieves the latest voice mail from the calling party, a map indicating all the locations of the truck driver for that day will be plotted allowing the employer to track whether the truck driver made all of his or her deliveries on time. A similar approach may be employed to track remote service providers, such as phone installers or cable television repair personnel, appliance installers, or the like.

To this end, the present invention addresses among its several aspects a method for providing a location enabled voice mail service comprising the steps of storing at a first time a voice mail message from a calling device of a first party for a called device of a second party, obtaining first location information for the calling device about the first time, retrieving the voice mail message at a second time, and providing said location enabled voice mail service as a function of the first location information.

A more complete understanding of the present invention, as well as further features and advantages of the invention, will be apparent from the following Detailed Description and the accompanying drawings.

### Brief Description of the Drawings

Fig. 1 illustrates an exemplary network system in accordance with the present invention.
Fig. 2 shows an exemplary call flow between the network elements of Fig. 1 to associate previous location information with a voice mail message at the time the voice mail message is left in accordance with the present invention.
Fig. 3 shows an exemplary call flow between the network elements of Fig. 1 at the time a voice mail message is retrieved to provide a personalized location specific multimedia message depending on the location of a called party in accordance with the present invention.
Fig. 4 illustrates exemplary functional components of the location server of Fig. 1 in accordance with the present invention.
Fig. 5 shows a flowchart of a method for leaving location enabled voice mail in accordance with the present invention.
Fig. 6 shows a flowchart of a method for retrieving location enabled voice mail in accordance with the present invention.

### Detailed Description

The present invention will now be described more fully with reference to the accompanying drawings, in which several presently preferred embodiments of the invention are shown. This invention may, however, be embodied in various forms and should not be construed as limited to the embodiments set forth herein. Rather, these embodiments are provided so that this disclosure will be thorough and complete, and will fully convey the scope of the invention to those skilled in the art.

As will be appreciated by one of skill in the art, the present invention may be embodied as methods, systems, or computer readable media. Accordingly, aspects of the present invention may take the form of a hardware embodiment, a software embodiment or an embodiment combining software and hardware aspects such as firmware. Furthermore, the present invention may take the form of a computer program on a computer-usable storage medium having computer-usable program code embodied in the medium. Any suitable computer readable medium may be utilized including hard disks, CD-ROMs, optical storage devices, flash memories, magnetic storage devices, or the like.

Computer program code or "code" for carrying out operations according to the present invention may be written in an object oriented programming language such as JAVA®, Smalltalk, JavaScript®, Visual Basic®, TSQL, Perl, C, C++ or in various other programming languages. Software embodiments of the present invention do not depend on implementation with a particular programming language. Portions of the code may execute entirely on one or more systems utilized by a server in the network or a mobile device.

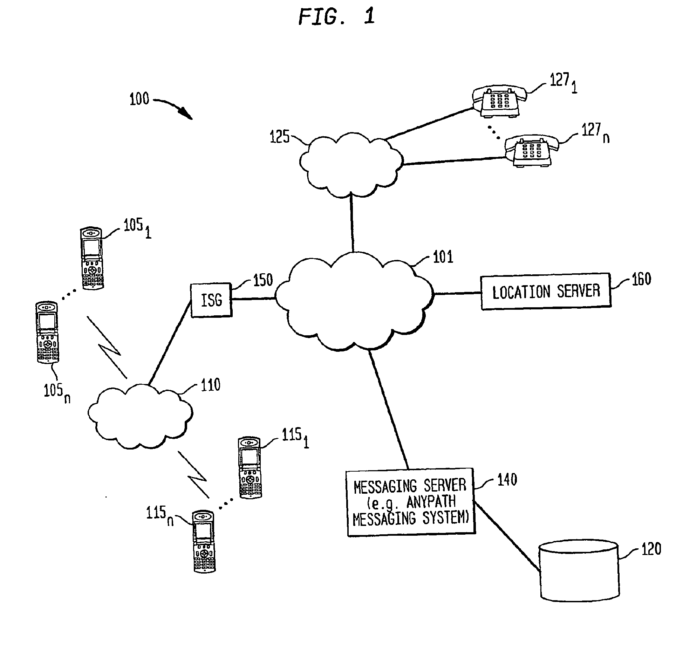

The code may execute partly on one network server and partly on another network server or a mobile or wireless device in communication with the network server over a communications network. Regarding the former scenario, Fig. 1 shows an exemplary system 100 for providing location enabled voice mail in accordance with the present invention. The system 100 includes an intelligent network (IN) 101 which provides a medium for establishing calls between mobile devices such as wireless devices 105₁-105ₙ, as well as, wired plain old telephone service (POTS) phones of all kinds such as POTS phones 127₁ - 127ₙ, with a voice mail system such as message server 140. A mobile device may be a cellular or wireless phone, or other mobile device, such as an internet protocol (IP) phone or mobile network device which is mobile and communicates with multiple other users for which a location enabled voice mail might be considered valuable. When the mobile device is a wireless device, the system 100 includes a wireless network 110 and an intelligent services gateway (ISG) 150 such as Lucent Technologies' MiLife® ISG. It should be noted that a mobile device including wireline devices such as POTS and IP phones may couple with IN network 101 through a PSTN, such as PSTN 125, voice over internet protocol (VoIP) segment interface protocol (SIP) network, and the like.

The wireless network 110 is coupled to a set of intelligent network (IN) devices including the ISG 150, the messaging server 140 such as Lucent Technologies' AMS modified in accordance with the teachings of the invention, a messaging database 120, and a location server 160, such as Lucent Technologies' iLocator server modified in accordance with the teachings of the invention.

ISG 150 translates queries made in one communication protocol to another communication protocol. A suitable intelligent services gateway is a parlay/OSA (open services access) standard compliant network element that exposes network capabilities to end user applications. It provides a single entry point regardless of the different flavors of wireless networks such as time division multiple access (TDMA) digital, code division multiple access (CDMA) or universal mobile telecommunications system (UMTS) networks. It also adheres to different wireless standards such as location interoperability forum (LIF) to support querying of location information from the location related elements.

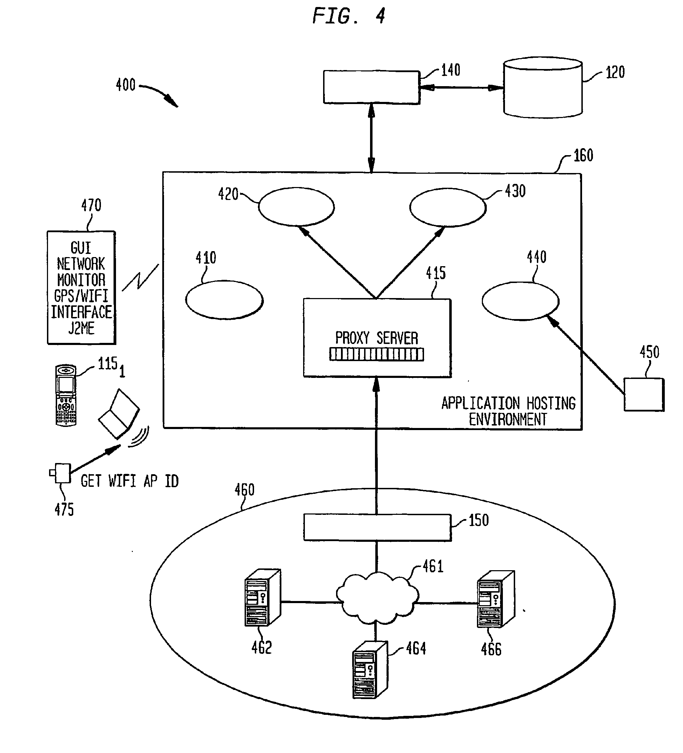

The location server 160 runs server code which provides a location and presence based track and alert service. Mobile devices, such as wireless devices 105₁-105ₙ and 115₁-115ₙ, may run client code to receive notifications of the presence and/or location of another wireless device. Location server 160 will be described in further detail in connection with Fig. 4. It will be recognized that the number of intelligent network devices and mobile switching centers which may be used in intelligent network 101 is not limited to the exemplary ones represented in Fig. 1.

While devices 105₁-105ₙ are shown as wireless device, it should be recognized that many aspects of the present invention apply to a wide variety of other mobile devices capable of initiating or receiving telephone calls, as well as, the full range of wireline devices.

Wireless network 110 provides wireless devices voice and data connectivity to the intelligent network 101. Wireless network 110 typically connect devices which include a function of acting as a service switching point (SSP) which allows the wireless network 110 to communicate using signaling system 7 (SS/7) signaling protocol. In particular, integrated services digital network user part (ISDNUP) messaging is used to initiate a call. However, other protocols may also be used such as ISDN messaging protocols, and the like.

The messaging server 140 contains an intelligent database service that offers large database capabilities. In particular, messaging server 140 may couple to a messaging database 120 which stores predetermined profiles of subscribers in accordance with the teachings of the present invention. A profile may include subscriber preferences such as rules for sending a map indicating the location of the calling party when a voice mail message is left also referred to as the previous location information. Additionally or alternatively, the profile may include rules to indicate the location of the calling party when the voice mail message is retrieved also referred to as current location information. Similarly, the profile may include rules to indicate the previous location or current location of the called party, also known as the subscriber.

These rules may vary depending on particular calling numbers, the time of day a voice mail is left, the time of day the voice mail is retrieved, or any combination thereto. Additionally, the subscriber profile may also contain rules to send a tailored multimedia message to the subscriber which is dependent on the previous or current location information. The tailored multimedia message includes a map, a voice message, a text message, or any combination thereto.

For example, a subscriber may configure his or her profile to enable or block certain calling parties from receiving a tailored multimedia message. The profile may classify certain calling numbers into different categories and have different rules applied to the different categories. For example, the profile may include categories for co-workers, family, personal friends, or the like. Rules may be specified to enable or disable sending tailored multimedia messages to callers calling from numbers in these categories. Additionally, rules may be specified to enable or disable sending tailored multimedia messages to the voice mail subscriber. It should be noted that although these rules may be specified in a profile, the same rules may be additionally or alternatively specified in a voice prompt when a calling party is leaving a voice mail message or when the subscriber retrieves his or her voice mail. The messaging server 140 also may suitably execute user preference application code which applies the rules specified in a profile in response to a query.

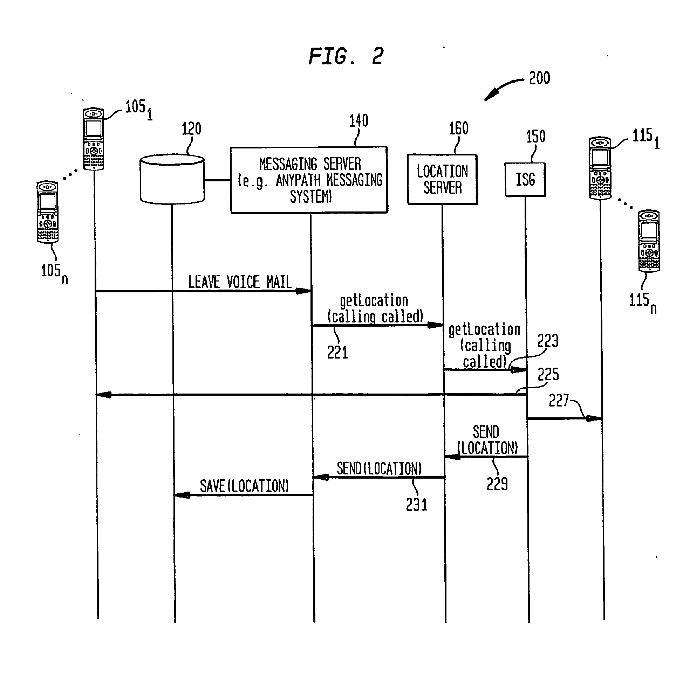

Fig. 2 shows an exemplary call flow between the network elements of Fig. 1 to associate previous location information with a voice mail message at the time the voice mail message is left in accordance with the present invention. This call flow 200 is shown implemented in conjunction with the location server 160 of Fig. 1 to provide a tailored multimedia message depending on the previous location of the cellular wireless phone of a calling party. It will be recognized that call flow 200 can be readily implemented with other messaging and location servers. The approach of call flow 200 incorporates a comprehensive set of network operational scenarios that account for network element failures, called party roaming outside the network, and the like. It should be noted that for ease of illustration and to focus the discussion on the invention, message flows to establish a call between the calling party and the messaging server are not illustrated, as they are well known. When a messaging server 140 receives a request from a calling party, for example, the user of wireless device 105₁, to leave a voice mail message for a called party, for example, the user of wireless device 115₁, it queries the location server 160 with a get location query 221. The get location query 221 contains the calling number, the called number, or both, depending on the preferences specified in the subscriber's profile or the subscribers' profiles where both parties are subscribers. Although the subscriber's profile is typically stored on messaging database 120, it may be stored on any number of databases in or accessible from the intelligent network 101. While the exemplary case of a subscriber profile is discussed, it will be understood that the caller checking voice mail may be given a voice prompt which prompts, for example, "if you would like to know the location of the calling party at the time this voice mail was left, press '0'. If you would like to know the current location of the calling party, press '1'." A fee could then be charged for the service.

Continuing with the exemplary call flow, the location server 160 may suitably employ well known tri-lateration based techniques to compute the locations using signal measurements from three or more base stations, for example. Alternatively, where a mobile device is connecting to the network with a Wi-fi® standard or Bluetooth® standard connection to a hot spot connection point or the like, the phone is registered at the connection point, and as the location of the connection point is known to the system, it can be readily determined that the mobile device is in proximity to the connection point and this location information can be utilized. Locations of wireline phones can be stored in accessible memory and looked up. While several examples are given above as to how location information can be obtained, it will be recognized that other techniques may also be employed.

The location server 160, in turn, queries ISG 150 with a get location query 223 to get the location information. In the depicted example of Fig. 2, both the location information for the calling party and the called party are requested. The ISG 150 converts query 223 from a protocol used in the intelligent network 101 such as LIF protocol to a second protocol used over the wireless network 110. Since location information is requested for both the calling party and the called party, the location server 160, utilizing the calling and called numbers, queries its database of records to retrieve the location information for the devices corresponding to the parties, such as wireless devices 105₁ and 115₁, for example. To retrieve up to date locations for wireless devices 105₁ and 115₁, the location server 160 may have to issue queries 225 and 227 through ISG 150 and, thus, through the wireless network 110. The ISG 150 converts query 223 from a protocol used in the intelligent network 101 to a second protocol used over the wireless network 110. The location of the parties are returned to ISG 150 from the wireless network 110 and forwarded to the location server 140 in a send message 229. The returned location may contain a raw location of the wireless devices 105₁ and 115₁ specified in latitude and longitude, for example, or may contain the geographic address such as "10 Main St., Murray Hill, New Jersey."

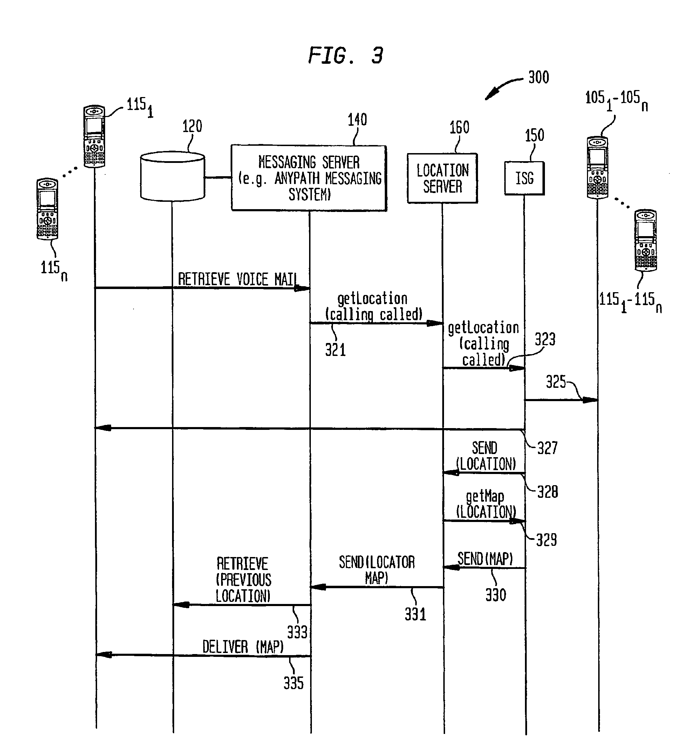

The location server 160 forwards the location information to the messaging server 140. The messaging server 140 saves the location information to the messaging database 120 as previous location information for subsequent retrieval which will be discussed further in connection with the discussion of Fig. 3.

Fig. 3 shows an exemplary call flow 300 between the network elements of Fig. 1 at the time a voice mail message is retrieved to provide a personalized location specific multimedia message depending on the location of a called party in accordance with the present invention. A subscriber, utilizing wireless device 115₁, requests review of his or her pending voice mails from the messaging server 140. Subscribers with phones such as wireless device 115₁ that have multimedia messaging service (MMS) capability could advantageously receive an MMS message indicating the previous or current location information of the calling party of a left voice mail message. For example, an MMS message may include a picture of Times Square if the calling party is in New York City, a picture of the White House if the calling party is in Washington DC, or simply a map of the current location of the calling party.

The message server 140 may provide options to the subscriber to retrieve a map showing the current and previous locations of the calling and called parties or a multimedia message communicating the current and previous locations of the calling and called parties involved in his or her voice mail message. Additionally or alternatively, a subscriber profile in messaging database 120 may store the subscriber's preferences with regard to automatically retrieving a map if the voice mail message is from a particular calling party number. In this case, the message server 140, executing user preference application code, retrieves a subscriber profile corresponding to the subscriber and applies the rules stored in the profile for generating an appropriate MMS message. For example, the subscriber profile may trigger a rule to send speech or text message indicating the previous and current locations of the calling party or a map containing the previous and current locations of the calling party.

In the exemplary call flow 300, the subscriber requests a map containing the current locations of both the calling and called party involved in the voice mail message being retrieved. The messaging server 140 queries the location server 160 with a get location query 321 for both the calling number and called number.

Location server 160, utilizing the calling and called numbers, queries its database of records to retrieve the location information for the wireless device corresponding to the parties, such as wireless devices 105₁ and 115₁, for example. To retrieve the locations, the location server 160 may have to issue queries 325 and 327 through ISG 150 and, thus, through the wireless network 110 to get up to date location information for these devices. The ISG 150 converts query 323 from a protocol used in the intelligent network 101 to a second protocol used over the wireless network 110. The location of the parties are returned to ISG 150 from the wireless network 110 and forwarded to the location server 160 in a send message 328. The returned location may contain a raw location of the wireless devices 105₁ and 115₁ specified in latitude and longitude, for example, or may contain the geographic address such as "600 Mountain Ave., Murray Hill, New Jersey."

Upon receipt of the current location information, the location server 160 also requests a map corresponding to the location returned for the calling party by issuing a getMap message 329 through ISG 150. The map may be retrieved from another intelligent peripheral connected to intelligent network 101 or may be retrieved by a service on the Internet accessed through ISG 150 as illustrated. The map is retrieved through ISG 150 and sent to the location server in a send message 330. The location server 160 sends the location of the parties and the retrieved map to the messaging server 140 in a send message 331. It should be noted that the function of retrieving a map based on a retrieved location may alternatively be performed by the messaging server 140.

The messaging server 140 retrieves the previous location information of the calling and called parties stored in the messaging server database 120 in a retrieve request message 333. Upon receipt of the previous information, the messaging server 140 plots the previous and current locations of the calling and called parties on the map and delivers the map in an MMS deliver message 335 to wireless device 115₁. Since a map is requested in exemplary flow 300, the retrieved map will be centered on the current location of the calling party, along with the previous location of the calling party. Optionally, the map may indicate the current and previous location of the called party relative to the calling party's current location. In exemplary call flow 300, the subscriber party devices 115₁-115ₙ will have a display to display a map, picture, or text keyed to the location of the called party.

Query 321 can be initiated directly to the ISG 150 or to the location server 160. A direct interface to ISG 150 is suitable when only the location of the called party needs to be determined. However, when a location based MMS message, for example, a map of the current location of the called party is to be delivered, it is desirable to interface directly with location server 160 which supports this functionality. In general, the connection to the location server is used when the users are known to be on the same network with a similar wireless technology. In any other instance, it is recommended that the calls flow through the ISG which provides a protocol transparency for end user applications.

Further details of a suitable architecture 400 of a location server 160 interfacing with ISG 150 and messaging server 140 are shown in Fig. 4. The location server 160 includes several software components including a client renderer 410, a location manager 420, a profile manager 430, server logic 440, and a proxy server 415. The location server 160 running code according to the teachings of the invention provides this location information by interfacing with the ISG 150. The location server 160 may be suitably implemented as an application host environment (AHE) kind of hardware. The location server 160 may be a front end to ISG 150 or Internet data servers 450 to obtain the location plus maps and other information. The location server 160 communicates with Internet protocol multi-media subsystem (IMS) elements 460. The MMS elements may include the ISG 150, a super distributed home location register (SDHLR) user profile information server 462, location servers 464, and enhanced business services provisioning 466. The location server 160 also communicates with the messaging sever 140 as described above. The messaging server retrieves pending voice mail messages from the messaging server database 120.

Client code 470 executes on a wireless device such as wireless device 115₁. As addressed above, the present location enabled approach is not just limited to cellular networks, but can also obtain the user location from a nearby Wi-fi® access point bypassing the call flow to the ISG 150. Once the current location of the calling party and a corresponding map is obtained by interfacing with the ISG 150 or location server 160 as described above or otherwise, the messaging server 140 retrieves previous location information and consolidates the previous and current location information on the obtained map. The messaging server 140 then delivers the map to the subscriber with the location information plotted.

Location server 160 can also play the role of reverse geocoding. In other words, location server 160 can be utilized to translate a raw location of a called user, specified in latitude and longitude, obtained from an ISG, such as ISG 150, to a geographic address, such as "Murray Hill, New Jersey". This geographic address is then passed back to the messaging server 140 and is converted to synthetic speech which is then sent to the subscriber when he or she retrieves voice mail.

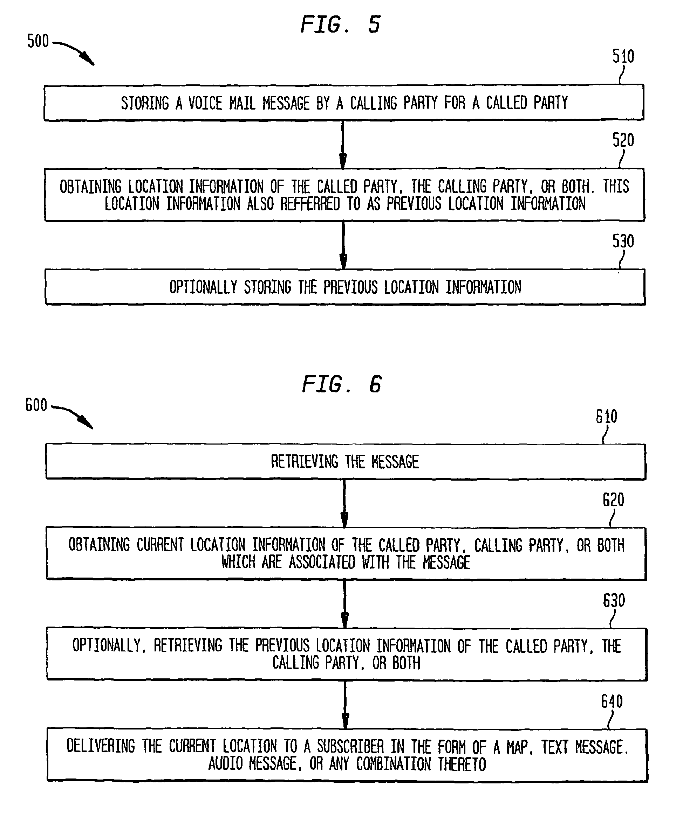

Fig. 5 shows a flowchart of a method 500 for leaving location enabled voice mail in accordance with the present invention. At step 510, a voice mail message is left by a calling party and stored for subsequent retrieval by a called party. At step 520, location information of the calling party, the called party, or both are obtained. This location information obtained at the time of leaving a voice mail message is also referred to as previous location information. At step 530, the previous location is optionally stored. Step 530 is optional because the present invention may utilize the saved voice mail to trigger the look up of a map plotting only current information of the calling and called party. at least two categories of calling parties are optionally established.

Fig. 6 shows a flowchart of a method 600 for retrieving location enabled voice mail in accordance with the present invention. At step 610, a subscriber retrieves the voice mail message left in method 500. At step 620, current location information of the calling party, called party, or both which are associated with the retrieved voice mail message is obtained. At step 630, the previous location information stored in method 500 is optionally retrieved. At step 640, the current location of the parties in the form of a map, text message, audio message, or any combination thereto are delivered to the subscriber.

While the present invention has been disclosed mainly in a presently preferred context of cellular or wireless phones, it will be recognized that the present teachings are applicable to a wide array of mobile network accessible devices such as internet protocol (IP) phones, portable game devices, or the like, which can be used at various locations and which could be advantageously located using the present teachings.

## Claims

1. A method for providing voice mail service comprising:
storing at a first time a voice mail message from a first mobile device (105₁) of a first party that has called a second mobile device (115₁) of a second party, the second mobile device having a voice mail system supported by a message server (140); and
retrieving the voice mail message from the message server utilizing the second mobile device (115₁) at a second time, the method **characterized by**;
providing location enabled voice mail service as follows
obtaining first location information for the first mobile device (105₁) at about the first time;
providing said location enabled voice mail service to the second mobile device (115₁) as a function of the first location information; and
causing the first location information to be displayed on a display of the second mobile device.

2. The method of claim 1 wherein said step of obtaining location information is performed during call setup for a call during which the voice mail message is stored.

3. The method of claim 1 comprising:
obtaining second location information for the first mobile device about the second time and associating the second location information with the retrieved voice mail message; and
providing said second location information to the second mobile device.

4. The method of claim 1 further comprising:
establishing at least first and second categories of calling parties; and
providing different location enabled voice mail service depending upon whether the calling party is in the first category or the second category.

5. The method of claim 1 further comprising:
retrieving a map, or a picture upon retrieving the voice mail message; and
providing the map, the picture, or message to the second mobile device of the party retrieving the voice mail message.

6. A system for providing a voice mail service comprising:
means for storing at a first time a voice mail message from a first mobile (105₁) device of a first party that has called a second mobile device (115₁) of a second party, the second mobile device having a voicemail system supported by a message server (140);
means for retrieving the voice mail message from the message server at a second time (115₁), the system **characterized by** providing location enabled voice mail service utilizing:
means for obtaining first location information for the first mobile device at about the first time (160);
means for providing said location enabled voice mail service to the second mobile device as a function of the first location information (160), and causing display of the first location information on a display of the second mobile device.

7. The system of claim 6 wherein said means for obtaining location information obtains the first location information during call setup for a call during which the voice mail message is stored.

8. The system of claim 6 wherein the stored voice mail message from the calling device of the first party is for the second mobile device, and the system further comprises:
means for obtaining second location information for the first calling device about the second time and associating the second location information with the retrieved voice mail message (160); and
means for providing said second location information to the second mobile device (140).

9. The system of claim 6 further comprising:
means for storing profiles of subscribers which establish at least first and second categories of calling parties (140); and
means for providing different location enabled voice mail service depending upon whether the calling party is in the first category or the second category (140).

10. The system of claim 6 further comprising:
means for retrieving a map as said location enabled voice mail service (140);
means for providing the map, the picture, or message to the device of the party retrieving the voice mail message (140); and
the display of the second mobile device displays the first location information on the map.

## Patentansprüche

1. Verfahren zur Bereitstellung eines Sprach-Mail-Dienstes, umfassend:
Speichern, zu einem ersten Zeitpunkt, einer Sprach-Mail-Nachricht von einem ersten Mobilgerät (105₁) eines ersten Teilnehmers, welcher ein zweites Mobilgerät (115₁) eines zweiten Teilnehmers angerufen hat, wobei das zweite Mobilgerät über ein von einem Nachrichtenserver (140) unterstütztes Sprach-Mail-System verfügt; und
Abrufen der Sprach-Mail-Nachricht aus dem Nachrichtenserver unter Verwendung des zweiten Mobilgeräts (115₁) zu einem zweiten Zeitpunkt, wobei das Verfahren **gekennzeichnet ist durch**:
Bereitstellen eines ortungsfähigen Sprach-Mail-Dienstes wie folgt:
Einholen einer ersten Standortangabe für das erste Mobilgerät (105₁) zu in etwa dem ersten Zeitpunkt;
Bereitstellen des besagten ortungsfähigen Sprach-Mail-Dienstes an das zweite Mobilgerät (115₁) in Abhängigkeit von der ersten Standortangabe; und
Bewirken, dass die erste Standortangabe auf einem Display des zweiten Mobilgeräts angezeigt wird.

2. Verfahren nach Anspruch 1, wobei der Schritt des Einholens der Standortangabe während des Rufaufbaus für einen Anruf, während welchem die Sprach-Mail-Nachricht gespeichert wird, durchgeführt wird.

3. Verfahren nach Anspruch 1, umfassend:
Einholen einer zweiten Standortangabe für das erste Mobilgerät zu in etwa dem zweiten Zeitpunkt, und Assoziieren der zweiten Standortangabe mit der abgerufenen Sprach-Mail-Nachricht; und
Bereitstellen der besagten zweiten Standortangabe an das zweite Mobilgerät.

4. Verfahren nach Anspruch 1, weiterhin umfassend:
Erstellen zumindest einer ersten und einer zweiten Kategorie von anrufenden Teilnehmern; und
Bereitstellen von unterschiedlichen ortungsfähigen Sprach-Mail-Diensten in Abhängigkeit davon, ob der anrufende Teilnehmer der ersten Kategorie oder der zweiten Kategorie angehört.

5. Verfahren nach Anspruch 1, weiterhin umfassend:
Abrufen einer Karte oder eines Bildes nach Abrufen der Sprach-Mail-Nachricht; und
Bereitstellen der Karte, des Bildes oder der Nachricht an das zweite Mobilgerät des Teilnehmers, welcher die Sprach-Mail-Nachricht abruft.

6. System zur Bereitstellung eines Sprach-Mail-Dienstes, umfassend:
Mittel zum Speichern, zu einem ersten Zeitpunkt, einer Sprach-Mail-Nachricht von einem ersten Mobilgerät (105₁) eines ersten Teilnehmers, welcher ein zweites Mobilgerät (115₁) eines zweiten Teilnehmers angerufen hat, wobei das zweite Mobilgerät über ein von einem Nachrichtenserver (140) unterstütztes Sprach-Mail-System verfügt; und
Mittel zum Abrufen der Sprach-Mail-Nachricht aus dem Nachrichtenserver zu einem zweiten Zeitpunkt (115₁), wobei das System **gekennzeichnet ist durch** das Bereitstellen des ortungsfähigen Sprach-Mail-Dienstes unter Verwendung eines:
Mittels zum Einholen einer ersten Standortangabe für das erste Mobilgerät zu in etwa dem ersten Zeitpunkt (160);
Mittels zum Bereitstellen des besagten ortungsfähigen Sprach-Mail-Dienstes an das zweite Mobilgerät in Abhängigkeit von der ersten Standortangabe (160); und zum Bewirken, dass die erste Standortangabe auf einem Display des zweiten Mobilgeräts angezeigt wird.

7. System nach Anspruch 6, wobei das besagte Mittel zum Einholen der Standortangabe die erste Standortangabe während des Rufaufbaus für einen Anruf, während welchem die Sprach-Mail-Nachricht gespeichert wird, einholt.

8. System nach Anspruch 6, wobei die gespeicherte Sprach-Mail-Nachricht von dem anrufenden Gerät des ersten Teilnehmers für das zweite Mobilgerät bestimmt ist, und wobei das System weiterhin umfasst:
Mittel zum Einholen einer zweiten Standortangabe für das erste anrufende Gerät zu in etwa dem zweiten Zeitpunkt, und zum Assoziieren der zweiten Standortangabe mit der abgerufenen Sprach-Mail-Nachricht (160); und
Mittel zum Bereitstellen der besagten zweiten Standortangabe an das zweite Mobilgerät (140).

9. System nach Anspruch 6, weiterhin umfassend:
Mittel zum Speichern von Profilen von Teilnehmern, welche zumindest eine erste und eine zweite Kategorie von anrufenden Teilnehmern erstellen (140); und
Mittel zum Bereitstellen von unterschiedlichen ortungsfähigen Sprach-Mail-Diensten in Abhängigkeit davon, ob der anrufende Teilnehmer der ersten Kategorie oder der zweiten Kategorie angehört (140).

10. System nach Anspruch 6, weiterhin umfassend:
Mittel zum Abrufen einer Karte als den besagten ortungsfähigen Sprach-Mail-Dienst (140); und
Mittel zum Bereitstellen der Karte, des Bildes oder der Nachricht an das Mobilgerät des Teilnehmers, welcher die Sprach-Mail-Nachricht abruft (140); und
wobei das Display des zweiten Mobilgeräts die erste Standortangabe auf der Karte anzeigt.

## Revendications

1. Procédé pour fournir un service de messagerie vocale comprenant les étapes suivantes :
stocker dans un premier temps un message de messagerie vocale provenant d'un premier dispositif mobile (105₁) d'un premier correspondant qui a appelé un deuxième dispositif mobile (115₁) d'un deuxième correspondant, le deuxième dispositif mobile présentant un système de messagerie vocale pris en charge par un serveur de messagerie (140) ; et
récupérer le message de messagerie vocale provenant du serveur de messagerie au moyen du deuxième dispositif mobile (115₁) dans un second temps, le procédé étant **caractérisé par** les étapes suivantes ;
fournir un service de messagerie vocale activée par l'emplacement comme suit
obtenir des premières informations d'emplacement pour le premier dispositif mobile (105₁) environ au premier temps ;
fournir ledit service de messagerie vocale activée par l'emplacement au deuxième dispositif mobile (115₁) en fonction des premières informations d'emplacement ; et
entraîner l'affichage des premières informations d'emplacement sur un écran du deuxième dispositif mobile.

2. Procédé selon la revendication 1 dans lequel ladite étape d'obtention d'informations d'emplacement est exécutée durant l'établissement d'un appel durant lequel le message de messagerie vocale est stocké.

3. Procédé selon la revendication 1, comprenant les étapes suivantes :
obtenir des deuxièmes informations d'emplacement pour le premier dispositif mobile environ au second temps et associer les deuxièmes informations d'emplacement au message de messagerie vocale récupéré ; et
fournir lesdites deuxièmes informations d'emplacement au deuxième dispositif mobile.

4. Procédé selon la revendication 1 comprenant en outre les étapes suivantes :
établir au moins une première et une deuxième catégories d'appelants ; et
fournir un service de messagerie vocale activée par l'emplacement différent selon que l'appelant est dans la première catégorie ou dans la deuxième catégorie.

5. Procédé selon la revendication 1 comprenant en outre les étapes suivantes :
récupérer une carte, ou une image lors de la récupération du message de messagerie vocale ; et
fournir la carte, l'image ou le message au deuxième dispositif mobile du correspondant récupérant le message de messagerie vocale.

6. Système pour fournir un service de messagerie vocale comprenant :
des moyens pour stocker dans un premier temps un message de messagerie vocale provenant d'un premier dispositif mobile (105₁) d'un premier correspondant qui a appelé un deuxième dispositif mobile (115₁) d'un deuxième correspondant, le deuxième dispositif mobile présentant un système de messagerie vocale pris en charge par un serveur de messagerie (140) ;
des moyens for récupérer le message de messagerie vocale provenant du serveur de messagerie dans un second temps (115₁), le système étant **caractérisé en ce qu'**il fournit un service de messagerie vocale activée par l'emplacement en utilisant :
des moyens pour obtenir des premières informations d'emplacement pour le premier dispositif mobile environ au premier temps (160) ;
des moyens pour fournir ledit service de messagerie vocale activée par l'emplacement au deuxième dispositif mobile en fonction des premières informations d'emplacement (160), et entraîner l'affichage des premières informations d'emplacement sur un écran du deuxième dispositif mobile.

7. Système selon la revendication 6 dans lequel lesdits moyens pour obtenir des informations d'emplacement obtiennent les premières informations d'emplacement durant l'établissement d'un appel durant lequel le message de messagerie vocale est stocké.

8. Système selon la revendication 6 dans lequel le message de messagerie vocale stocké provenant du dispositif d'appel du premier correspondant est pour le deuxième dispositif mobile, et le système comprend en outre :
des moyens pour obtenir des deuxièmes informations d'emplacement pour le premier dispositif d'appel environ au second temps et associer les deuxièmes informations d'emplacement au message de messagerie vocale récupéré (160) ; et
des moyens pour fournir lesdites deuxièmes informations d'emplacement au deuxième dispositif mobile (140).

9. Système selon la revendication 6 comprenant en outre :
des moyens pour stocker des profils d'abonnés qui établissent au moins une première et une deuxième catégories d'appelants (140) ; et
des moyens pour fournir un service de messagerie vocale activée par l'emplacement différent selon que l'appelant est dans la première catégorie ou dans la deuxième catégorie (140).

10. Système selon la revendication 6 comprenant en outre :
des moyens pour récupérer une carte comme ledit service de messagerie vocale activée par l'emplacement (140) ;
des moyens pour fournir la carte, l'image ou le message au dispositif du correspondant récupérant le message de messagerie vocale (140) ; et
l'écran du deuxième dispositif mobile affiche les premières informations d'emplacement sur la carte.
